# EUROPEAN PATENT APPLICATION

(11) **EP 1 646 207 A2**
(43) Date of publication of application: **12.04.2006**
(21) Application number: 05016483.9
(22) Date of filing: 29.07.2005
(51) Int. Cl.: H04L 29/12, H04L 29/06

(54) **A network address translation method for a mixed IP Version 4 / IP Version 6 network and apparatus thereof**

(30) Priority: 05.08.2004 CN 200410053432
(71) Applicant: Alcatel S.A., 75008 Paris (FR)
(72) Inventor: Yan, RenXiang, c/oAlcatel Shanghai Bell, 2001206 Shanghei (CN); Jiang, YingLan, c/oAlcatel Shanghai Bell, 2001206 Shanghei (CN); Jiang, Wei, c/oAlcatel Shanghai Bell, 2001206 Shanghei (CN); Bin, FangXiang, c/oAlcatel Shanghai Bell, 2001206 Shanghei (CN); Zhu, Ke Yao, c/oAlcatel Shanghai Bell, 2001206 Shanghei (CN)
(74) Representative: Schäfer, Wolfgang

(57) **Abstract**

The present invention provides a network address translation method and apparatus thereof. The method and apparatus only requires one IPv4 public address when IPv6 devices in an IPv4 private network communicate with IPv6 devices in a remote network by taking an one-to-one correspondence mapping relationship between IPv4 private addresses and IPv6 addresses. The present invention is simple and greatly reduces occupation of the IPv4 public addresses.

## Description

### Technical Field

The present invention relates to a technical field of network and communication, more specifically, to a network address translation method and apparatus thereof, which is applied to communication between IPv6 (Internet Protocol version No. 6) devices in an IPv4 (Internet Protocol version No.4) private network and IPv6 devices in a remote network through an IPv4 public network.

### Background Art

In recent years, with rapid development of Internet, the amount of hosts connected into Internet has been increased in double. 32 bits IP address space in IPv4 protocol hasn't been satisfied the requirement of the development of Internet, while 128 bits IP address space in IPv6 protocol brings us an unimaginable tremendous address space. Although it is expected that IPv4 can be changed to IPv6 protocol at a draught, the transition from IPv4 protocol to IPv6 protocol cannot be accomplished at once due to the great scale of Internet and the tremendous amount of users and devices of IPv4 protocol, that is, the transition must be advanced step by step. Therefore, these two protocols must work in coordination with each other inevitably in current stage.

In current small office/home office (SOHO) IPv4 network configuration, the technology of network address translation (NAT) is often used to isolate an IPv4 private network from an IPv4 public network in order to solve the problem of lack of IP addresses. The basic function of NAT technology is that the IP communications between all hosts in one IPv4 private network and the hosts in the IPv4 public network can be accomplished by using one or several IP addresses. A solution of the prior art does employ the NAT technology for the communication through an IPv4 public network between IPv6 devices in an IPv4 private network and IPv6 devices in a remote network. Firstly, a communication tunnel which passes through a NAT device and the IPv4 public network should be established between the IPv6 device in the IPv4 private network and the IPv6 device in the remote network. Next, the IPv6 device in the IPv4 private network stores an IPv6 packet as data content in an IPv4 packet and sends the IPv4 packet to the NAT device. The NAT device reads an IPv4 private address (i.e. a source IPv4 address) from the received packet and converts the IPv4 private address into an IPv4 public address, while it stores a mapping relationship between the IPv4 private address and the IPv4 public address, and then, the converted IPv4 packet is transmitted to the IPv6 device in the remote network. For a packet sent by an IPv6 device in a remote network, the NAT device reads an IPv4 public address (i.e. a target IPv4 address) from the packet, and converts the read IPv4 public address into an IPv4 private address according to the stored mapping relationship between the IPv4 private address and the IPv4 public address, and then transmits the converted packet to an IPv6 device in the private network. This is a simple solution, but each IPv4 private address (i.e. source IPv4 address) requires a different IPv4 public address for converting. Therefore, if there are a great number of IPv6 devices in an IPv4 private network, the current NAT device has to consume a great number of IPv4 public addresses.

In order to solve above disfigurement in the prior art, the present invention provides a new type of network address translation method and apparatus thereof.

### Contents of the Invention

The object of the present invention is to provide a network address translation method and an apparatus thereof. The method and the apparatus not only are simple, but also can accomplish the communication through an IPv4 public network between all IPv6 devices in an IPv4 private network and IPv6 devices in a remote network by occupying only one IPv4 public address, therefore, the occupation of IPv4 public addresses can be reduced greatly.

A network address translation method of the present invention for being applied to communication through an IPv4 public network between IPv6 devices in an IPv4 private network and IPv6 devices in a remote network, comprising following steps:

when the communication proceeds from the IPv6 devices in the IPv4 private network to the IPv6 devices in the remote network:
a) receiving IPv4 packets sent by the IPv6 devices in the IPv4 private network, reading IPv4 private addresses and IPv6 addresses of the IPv6 devices in the IPv4 private network from the IPv4 packets, and converting the obtained IPv4 private addresses into an IPv4 public address;
b) recording the IPv4 private addresses, the IPv6 addresses and the IPv4 public address obtained in said step a), and transmitting the converted packets to the IPv6 devices in the remote network after storing mapping relationships of the three addresses;
   when the communication proceeds from the IPv6 devices in the remote network to the IPv6 devices in the IPv4 private network:
c) receiving IPv4 packets sent by the IPv6 devices in the remote network, and reading the IPv4 public address and IPv6 addresses of the IPv6 devices in the IPv4 private network from the IPv4 packets;
d) converting the IPv4 public address obtained in step c) into the IPv4 private addresses obtained in step a) according to the mapping relationships obtained in step b ), and transmitting the converted packets to the IPv6 devices in the IPv4 private network.

In this method, the remote network is an IPv6 network or an IPv4 network. The IPv6 devices in an IPv4 private network are dual-stack hosts or dual-stack routers which support both IPv4 protocol and IPv6 protocol.

A network address translation apparatus of the present invention for being applied to communication through an IPv4 public network between IPv6 devices in an IPv4 private network and IPv6 devices in a remote network, comprising a network interface module and an administration module.

The network interface module is used for receiving IPv4 packets sent by the IPv6 devices in the IPv4 private network and transmitting packets converted by the administration module to the IPv6 devices in the remote network when the communication proceeds from the IPv6 devices in the IPv4 private network to the IPv6 devices in the remote network, and receiving IPv4 packets sent by the IPv6 devices in the remote network and transmitting packets converted by the administration module to the IPv6 devices in the IPv4 private network when the communication proceeds from the IPv6 devices in the remote network to the IPv6 devices in the IPv4 private network.

The administration module comprises an address converting unit, an IPv4 public address storing unit and a mapping table storing unit.

The address converting unit is used for reading IPv4 private addresses and IPv6 addresses of the IPv6 devices in the IPv4 private network from IPv4 packets received by the network interface module and converting the obtained IPv4 private addresses into an IPv4 public address of the network address translation apparatus stored in the IPv4 public address storing unit when the communication proceeds from the IPv6 devices in the IPv4 private network to the IPv6 devices in the remote network, and reading IPv4 public address of the network address translation apparatus and

IPv6 addresses of the IPv6 devices in the IPv4 private network from IPv4 packets received by the network interface module and converting the obtained IPv4 public address into the IPv4 private addresses according to the mapping relationships stored in the mapping table storing unit of the administration module when the communication proceeds from the IPv6 devices in the remote network to the IPv6 devices in the IPv4 private network;

The IPv4 public address storing unit is used for storing the IPv4 public address of the network address translation apparatus.

The mapping table storing unit is used for recording the IPv4 private addresses, the IPv6 addresses, and the IPv4 public address of the network address translation apparatus, obtained by the address converting unit when the communication proceeds from the IPv6 devices in the IPv4 private network to the IPv6 devices in the remote network, and storing the mapping relationships of the three addresses.

The apparatus further comprises an administrator interface module, through which a system administrator configures IPv4 public addresses in the IPv4 public address storing unit and / or examines information stored in the mapping table storing unit.

In the present invention, only one IPv4 public address is occupied when IPv6 devices in the IPv4 private network communicate with IPv6 devices in the remote network by using the one-to- one correspondence mapping relationships between the IPv4 private addresses and the IPv6 addresses, therefore, the problem of lack of IP addresses (i.e. IPv4 public addresses) can be further solved.

### Description of Figures

Fig.1 is a structural schematic diagram of a network address translation apparatus according to an embodiment of the present invention;
Fig.2 is a schematic diagram showing communication between IPv6 devices in an IPv4 private network and IPv6 devices in a remote network by using the network address translation apparatus of the present invention.

### Mode of Carrying out the Invention

The present invention will be further described with reference to the accompanying drawings and the embodiments.

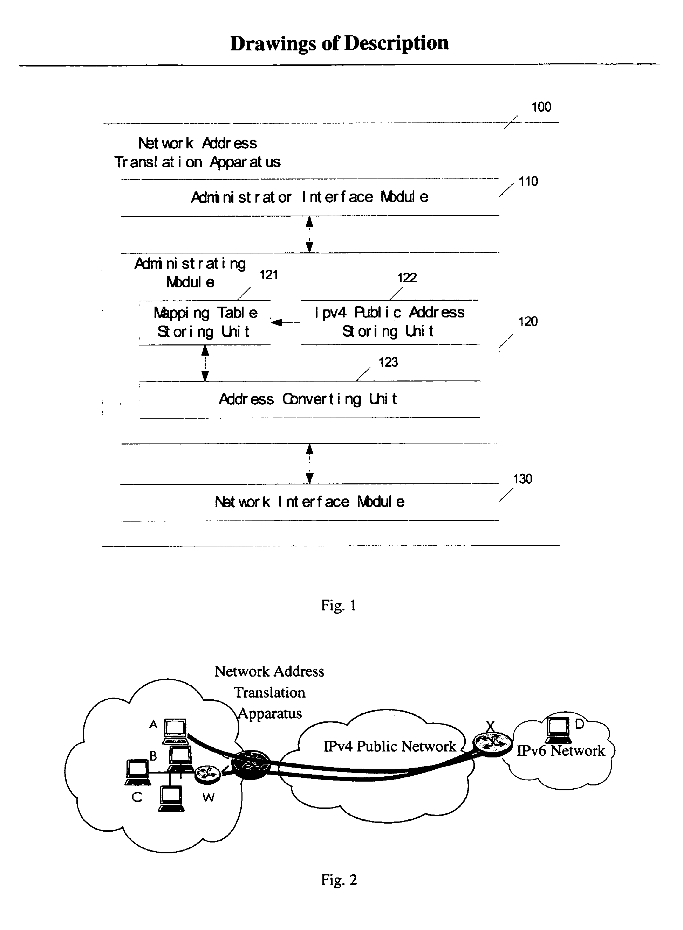

Fig.1 shows a structural schematic diagram of a network address translation apparatus according to an embodiment of the present invention. As shown in Fig.1, network address translation apparatus 100 of the present invention for being applied to communication through an IPv4 public network between IPv6 devices in an IPv4 private network and

IPv6 devices in a remote network, comprising a network interface module 130 and an administration module 120.

The network interface module 130 is used for receiving the IPv4 packets sent by the IPv6 devices in the IPv4 private network and transmitting the packets converted by the administration module 120 to the IPv6 devices in the remote network when the communication proceeds from the IPv6 devices in the IPv4 private network to the IPv6 devices in the remote network, and receiving the IPv4 packets sent by the IPv6 devices in the remote network and transmitting the packets converted by the administration module 120 to the IPv6 devices in the IPv4 private network when the communication proceeds from the IPv6 devices in the remote network to the IPv6 devices in the IPv4 private network;

The administration module 120 comprises an address converting unit 123, an IPv4 public address storing unit 122 and a mapping table storing unit 121

The address converting unit 123 is used for reading the IPv4 private addresses and the IPv6 addresses of the IPv6 devices in the IPv4 private network from the IPv4 packets received by the network interface module 130 and converting the obtained IPv4 private addresses into an IPv4 public address of the network address translation apparatus 100 stored in the IPv4 public address storing unit 122 when the communication proceeds from the IPv6 devices in the IPv4 private network to the IPv6 devices in the remote network, and reading the IPv4 public address of the network address translation apparatus 100 and the IPv6 addresses of the IPv6 devices in the IPv4 private network from the IPv4 packets received by the network interface module 130 and converting the obtained IPv4 public address into the IPv4 private addresses according to the mapping relationships stored in the mapping table storing unit 121 of the administration module 120 when the communication proceeds from the IPv6 devices in the remote network to the IPv6 devices in the IPv4 private network.

The IPv4 public address storing unit 122 is used for storing the IPv4 public address of the network address translation apparatus 100.

The mapping table storing unit 121 is used for recording the IPv4 private addresses, the IPv6 addresses, and the

IPv4 public address of the network address translation apparatus 100, obtained by the address converting unit 123 when the communication proceeds from the IPv6 devices in the IPv4 private network to the IPv6 devices in the remote network, and storing the mapping relationships of the three addresses.

Moreover, the network address translation apparatus 100 further comprises an administrator interface module 110, through which a system administrator can configure the IPv4 public addresses in the IPv4 public address storing unit 122 and / or can examine the information stored in the mapping table storing unit 121.

Fig.2 shows a schematic diagram showing the communication between the IPv6 devices in an IPv4 private network and the IPv6 devices in a remote network by using the network address translation apparatus of the present invention. As shown in Fig.2, both the host A and the router X are dual-stack devices in the IPv4 private network which support both IPv4 network and IPv6 network, and the host B or C is a device in the IPv6 network, wherein dual-stack host A is an IPv6 device in the IPv4 private network, and the host B or C along with the dual-stack router X constitutes an IPv6 device in the IPv4 private network.

When the dual-stack host A wants to communicate with the host D in the remote IPv6 network through the IPv4 public network, firstly, a communication tunnel which passes through the network address translation apparatus 100 of present invention and the IPv4 public network should be established between the dual-stack host A and the dual-stack router X, then the dual-stack host A communicates with the dual-stack host D via the dual-stack router X, wherein the method for establishing the tunnel is well known in the prior art and omitted herein.

Here, assuming that the IPv4 private address and the IPv6 address of dual-stack host A are 192.168.32.10 and 2002:4580::e345:d3a0 respectively, the IPv4 public address occupied by the network address translation apparatus 100 is 202.206.16.1, the IPv4 public address of the dual-stack router X is 130.30.21.1, and the IPv6 address of the host D is 2002:2380::F385:E321.

When the dual-stack host A in the IPv4 private network communicates with the host D in the IPv6 remote network, the dual-stack hos A stores an IPv6 packet as a data content in an IPv4 packet and sends the IPv4 packet to the network address translation apparatus 100. The format of packet sent by the dual-stack host A is as follows (being simplified):

| IPv4 packet | | | | |
|---|---|---|---|---|
| IPv4 packet head | | IPv4 packet content (IPv6 packet) | | |
| Source address | Target address | IPv6 packet head | | IPv6 packet content |
| --- | --- | Source address | Target address | --- |
| 192.168.32.10 | 130.30.21.1 | 2002:4580::e345:d3a0 | 2002:2380::F385:E321 | Data |

The network address translation apparatus 100 reads IPv4 private address 192.168.32.10 and IPv6 address 2002:4580::e345:d3a0 of the dual-stack host A (i.e. the source IPv4 address and the source IPv6 address) from the received packet, converts the obtained IPv4 private address 192.168.32.10 into the IPv4 public address 202.206.16.1 occupied by the network address translation apparatus 100, records the above obtained IPv4 private address 192.168.32.10, IPv6 address 2002:4580::e345:d3a0 and IPv4 public address 202.206.16.1, and transmits the converted packet to the dual-stack router X via the established tunnel after storing the mapping relationships of the three addresses. In this case, the format of the converted packet is as follows:

| IPv4 packet | | | | |
|---|---|---|---|---|
| IPv4 packet head | | IPv4 packet content (IPv6 packet) | | |
| Source address | Target address | IPv6 packet head | | IPv6 packet content |
| --- | --- | Source address | Target address | --- |
| 202.206.16.1 | 130.30.21.1 | 2002:4580::e345:d3a0 | 2002:2380::F385:E321 | Data |

The mapping relationships, which are stored in network address translation apparatus 100, of the IPv4 private address, the IPv6 address and the IPv4 public address, is as follows:

| ID | IPv4 private address (source IPv4 address) | IPv6 address (source IPv6 address) | IPv4 public address |
|---|---|---|---|
| 1 | 192.168.32.10 | 2002:4580::e345:d3a0 | 202.206.16.1 |

After receiving the packet, the dual-stack router X reads the IPv6 packet from the IPv4 packet and transmits the IPv6 packet to the host D in the remote IPv6 network according to the target address in the packet.

When the host D in the remote IPv6 network communicates with the dual-stack host A in the IPv4 private network, the host D sends an IPv6 packet to the dual-stack router X, the dual-stack router X stores the received IPv6 packet as data content in an IPv4 packet and sends the IPv4 packet to the network address translation apparatus 100. In this case, the format of the IPv4 packet processed by the dual-stack router X is as follows:

| IPv4 packet | | | | |
|---|---|---|---|---|
| IPv4 packet head | | IPv4 packet content (IPv6 packet) | | |
| Source address | Target address | IPv6 packet head | | IPv6 packet content |
| --- | --- | Source address | Target address | --- |
| 130.30.21.1 | 202.206.16.1 | 2002:2380::F385:E321 | 2002:4580::e345:d3a0 | Data |

The network address translation apparatus 100 reads the IPv6 address 2002:4580::e345:d3a0 of the dual-stack host A in the IPv4 private network (i.e. the target IPv6 address) and the IPv4 public address 202.206.16.1 of the network address translation apparatus 100 (i.e. the target IPv4 address) from the received packet. Then the network address translation apparatus 100 converts the IPv4 public address 202.206.16.1 into the IPv4 private address 192.168.32.10 according to the mapping relationships of the IPv4 private address, the IPv6 address and the IPv4 public address stored therein, , and transmits the converted packet to the dual-stack host A in the IPv4 private network. In this case, the format of the IPv4 packet converted by the network address translation apparatus 100 is as follows:

| IPv4 packet | | | | |
|---|---|---|---|---|
| IPv4 packet head | | IPv4 packet content (IPv6 packet) | | |
| Source address | Target address | IPv6 packet head | | IPv6 packet content |
| --- | --- | Source address | Target address | --- |
| 130.30.2 1.1 | 192.168.3 2.10 | 2002:2380::F385: E321 | 2002:4580::e345: d3a0 | Data |

As shown in Fig.2, when the host B or C wants to communicate with the host D in the remote IPv6 network via dual-stack router W, firstly, a communication tunnel which passes through the network address translation apparatus 100 of the present invention and the IPv4 public network should be established between the dual-stack router W and the dual-stack router X, then the host B or C communicates with the dual-stack host D via the dual-stack router W and the dual-stack router X, wherein the method for establishing the tunnel is well known in the prior art and omitted herein.

Here, assuming that the IPv6 address of the dual-stack host B is 2002:4580::e345:d3a2, the IPv6 address of the dual-stack host C is 2002:4580::e345:d3a5, and the IPv4 private address of the dual-stack router W is 192.168.32.11.

The process of the communication via the dual-router W between the host B or C and the host D in the remote IPv6 network is the same as that between the host A and the host D in the remote IPv6 network, except that the dual-stack A stores the IPv6 packet as data content in an IPv4 packet and sends it directly to the network address translation apparatus 100, while the dual-stack host B or C sends the IPv6 packet to the dual-stack router W, and the dual-stack router W stores the received IPv6 packet as data content in an IPv4 packet and sends it to the network address translation apparatus 100.

When the dual-stack host A, the host B and C communicate with the host D in the remote IPv6 network via the dual-stack router W at the same time, the following mapping relationships are stored in the network address translation apparatus 100 of the present invention:

| ID | IPv4 private address (source IPv4 address) | IPv6 address (source IPv6 address) | IPv4 public address |
|---|---|---|---|
| 1 | 192.168.32.10 | 2002:4580::e345:d3a0 | 202.206.16.1 |
| 2 | 192.168.32.11 | 2002:4580::e345:d3a2 | 202.206.16.1 |
| 3 | 192.168.32.11 | 2002:4580::e345:d3a5 | 202.206.16.1 |

As shown in the above table, the communication through an IPv4 public network between all IPv6 devices in an IPv4 private network and all IPv6 devices in a remote IPv6 network can be accomplished by occupying only one IPv4 public address for the network address translation apparatus 100 of the present invention owing to the mapping relationships of one-to-one correspondence between the IPv4 private addresses and the IPv6 addresses.

Of course, the communication through an IPv4 public network between IPv6 devices in an IPv4 private network and IPv6 devices in an remote IPv4 private network can also be accomplished, as long as there are two network address translation apparatuses 100 of the present invention.

While the present invention has been described with reference to specific embodiments, it is apparent to those skilled in the art that many alternatives, modifications and variations can be made according to above description without departure from the spirit and the scope defined by the appending claims.

## Claims

1. A network address translation method for being applied to communication through an IPv4 public network between IPv6 devices in an IPv4 private network and IPv6 devices in a remote network, comprising following steps:
when the communication proceeds from the IPv6 devices in the IPv4 private network to the IPv6 devices in the remote network:
a. receiving IPv4 packets sent by the IPv6 devices in the IPv4 private network, reading IPv4 private addresses and IPv6 addresses of the IPv6 devices in the IPv4 private network from the IPv4 packets, and converting the obtained IPv4 private addresses into an IPv4 public address;
b. recording the IPv4 private addresses, the IPv6 addresses and the IPv4 public address obtained in said step a, and transmitting the converted packets to the IPv6 devices in the remote network after storing mapping relationships of the three addresses;
when the communication proceeds from the IPv6 devices in the remote network to the IPv6 devices in the IPv4 private network:
c. receiving the IPv4 packets sent by the IPv6 devices in the remote network, and reading the IPv4 public address and the IPv6 addresses of the IPv6 devices in the IPv4 private network from the IPv4 packets;
d. converting the IPv4 public address obtained in step c into the IPv4 private addresses obtained in step a according to the mapping relationships obtained in step b, and transmitting the converted packets to the IPv6 devices in the IPv4 private network.

2. The network address translation method according to claim 1, wherein the remote network an IPv6 network or an IPv4 network.

3. The network address translation method according to claim 1, wherein the IPv6 devices in an IPv4 private network are dual-stack hosts or dual-stack routers which support both IPv4 protocol and IPv6 protocol.

4. A network address translation apparatus for being applied to communication through an IPv4 public network between IPv6 devices in an IPv4 private network and IPv6 devices in a remote network, comprising a network interface module and an administration module, wherein:
the network interface module is used for receiving IPv4 packets sent by the IPv6 devices in the IPv4 private network and transmitting packets converted by the administration module to the IPv6 devices in the remote network when the communication proceeds from the IPv6 devices in the IPv4 private network to the IPv6 devices in the remote network, and receiving IPv4 packets sent by the IPv6 devices in the remote network and transmitting packets converted by the administration module to the IPv6 devices in the IPv4 private network when the communication proceeds from the IPv6 devices in the remote network to the IPv6 devices in the IPv4 private network;
the administration module comprises an address converting unit, an IPv4 public address storing unit and a mapping table storing unit, wherein:
the address converting unit is used for reading IPv4 private addresses and IPv6 addresses of said IPv6 devices in the IPv4 private network from the IPv4 packets received by the network interface module and converting the obtained IPv4 private addresses into an IPv4 public address of the network address translation apparatus stored in the IPv4 public address storing unit when the communication proceeds from the IPv6 devices in the IPv4 private network to the IPv6 devices in the remote network, and reading the IPv4 public address of the network address translation apparatus and the IPv6 addresses of the IPv6 devices in the IPv4 private network from the IPv4 packets received by the network interface module and converting the obtained IPv4 public address into the IPv4 private addresses according to mapping relationships stored in the mapping table storing unit of the administration module when the communication proceeds from the IPv6 devices in the remote network to the IPv6 devices in the IPv4 private network;
the IPv4 public address store unit is used for storing the IPv4 public address of the network address translation apparatus;
the mapping table storing unit is used for recording the IPv4 private addresses, the IPv6 addresses, and the IPv4 public address of the network address translation apparatus, obtained by the address converting unit when the communication proceeds from the IPv6 devices in the IPv4 private network to the IPv6 devices in the remote network, and storing the mapping relationships of the three addresses.

5. The network address translation apparatus according to claim 4, further comprises an administrator interface module, through which a system administrator configures IPv4 public addresses in the IPv4 public address storing unit and/or examines information stored in the mapping table storing unit.

6. The network address translation apparatus according to claim 4, wherein the remote network an IPv6 network or an IPv4 network.

7. The network address translation apparatus according to claim 4, wherein the IPv6 devices in an IPv4 private network are dual-stack hosts or dual-stack routers which support both IPv4 protocol and IPv6 protocol.
